Europäisches Patentamt

(19) European Patent Office

Office européen des brevets

(11) Numéro de publication: **0 168 333**

**A1**

# (12) DEMANDE DE BREVET EUROPEEN

(21) Numéro de dépôt: **85420109.2**

(22) Date de dépôt: **14.06.85**

(51) Int. Cl.⁴: **F 16 L 37/00**

(30) Priorité: **14.06.84 FR 8409530**

(43) Date de publication de la demande:
**15.01.86 Bulletin 86/3**

(84) Etats contractants désignés:
**BE CH DE GB IT LI**

(71) Demandeur: **S.A. DES ETABLISSEMENTS STAUBLI
(France)**

**F-74210 Faverges(FR)**

(72) Inventeur: **Truchet, Gaston
Impasse des Mésanges
F-74210 Faverges(FR)**

(74) Mandataire: **Monnier, Guy et al,
Cabinet Monnier 142-150 Cours Lafayette B.P. 3058
F-69393 Lyon Cédex 03(FR)**

(54) Dispositif de raccord pour le branchement simultané d'une série de circuits.

(57) L'une des pièces (1, 6) qui portent les éléments mâles (2) et femelles (6b) des raccords élémentaires à réunir est pourvue d'un verrou (4) susceptible de tourner et de se délacer axialement à l'encontre du ressort (5). Ce verrou porte deux goujons latéraux (4b) qui coopèrent avec des rampes ménagées dans une douille (9) solidaire de l'autre pièce (6).

Fig.3

EP 0 168 333 A1

La présente invention a trait aux dispositifs de raccord qui sont agencés de façon à permettre le branchement simultané d'une série de circuits indépendants.

Les dispositifs de ce type, ordinairement dénommés "raccords multiples", sont susceptibles d'être utilisés pour une foule d'applications différentes, parmi lesquelles on peut notamment citer les installations pneumatiques ou hydrauliques et, de manière plus particulière, les systèmes de circulation d'eau pour le refroidissement des moules d'injection de matière plastique. Dans tous les cas, on exige que le dispositif de raccord soit de construction économique et fiable, et que son utilisation soit extrêmement simple, évitant tout tâtonnement ou hésitation de la part de l'opérateur.

L'invention a pour objet un dispositif de ce genre qui répond particulièrement bien aux impératifs ci-dessus rappelés.

Le dispositif suivant l'invention comprend à la façon en soi connue deux pièces assemblables formant supports pour les éléments mâles, respectivement les éléments femelles, des raccords élémentaires associés aux différents circuits à réunir, ces éléments étant propres à s'emmancher de manière étanche les uns dans les autres et à être retenus à cette position par les moyens qui assurent l'assemblage des deux pièces ou supports.

Son originalité réside principalement dans le fait que les moyens d'assemblage comprennent d'une part un verrou rotatif pourvu de deux goujons latéraux opposés et monté sur l'une des pièces de manière à pouvoir se déplacer axialement à l'encontre de moyens élastiques de rappel, et d'autre part une douille de blocage solidaire de la seconde pièce et dont l'ouverture présente deux entailles diamétralement opposées pour permettre le passage des goujons du verrou lorsque celui-ci est repoussé dans l'ouverture précitée, laquelle douille assure la retenue de ce verrou une fois

2   0168333

que celui-ci a été déplacé angulairement.

D'autres caractéristiques du dispositif suivant l'invention ressortiront de la description qui va suivre en référence au dessin annexé, lequel dessin, donné à titre d'exemple, permettra de mieux comprendre l'invention, les caractéristiques qu'elle présente et les avantages qu'elle est susceptible de procurer :

Fig. 1 est une coupe axiale schématique montrant un dispositif de raccord suivant l'invention, préalablement à son montage.

Fig. 2 est une vue en perspective illustrant l'agencement des moyens d'assemblage des deux pièces principales du dispositif suivant fig. 1.

Fig. 3 reproduit fig. 1 après montage des deux pièces et présentation des deux séries d'éléments.

Fig. 4 est une coupe transversale illustrant le rapprochement mutuel des deux pièces du dispositif.

Fig. 5 reproduit fig. 3 après manoeuvre en rotation du verrou.

Fig. 6 est la coupe transversale correspondante, suivant le plan indiqué en VI-VI en fig. 5.

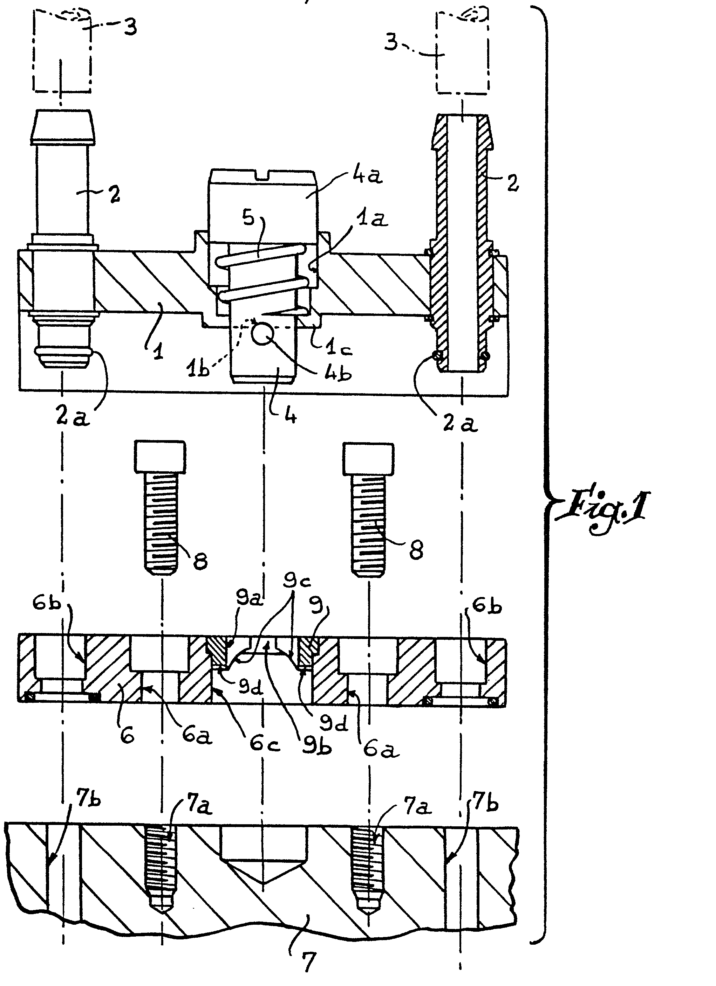

En fig. 1, la référence 1 désigne une pièce métallique à section transversale en forme de U ouverte vers le bas. Sur cette pièce 1 sont fixés les éléments mâles 2 des raccords individuels du dispositif envisagé ; chacun de ces éléments 2 est constitué par une tubulure dont la base, disposée en saillie à l'intérieur du profil en U de la pièce 1, porte un joint torique 2a, tandis que le sommet est profilé pour recevoir une canalisation souple 3. Ces éléments 2 peuvent être en nombre quelconque et leur disposition sur la pièce 1 peut varier dans une très large mesure.

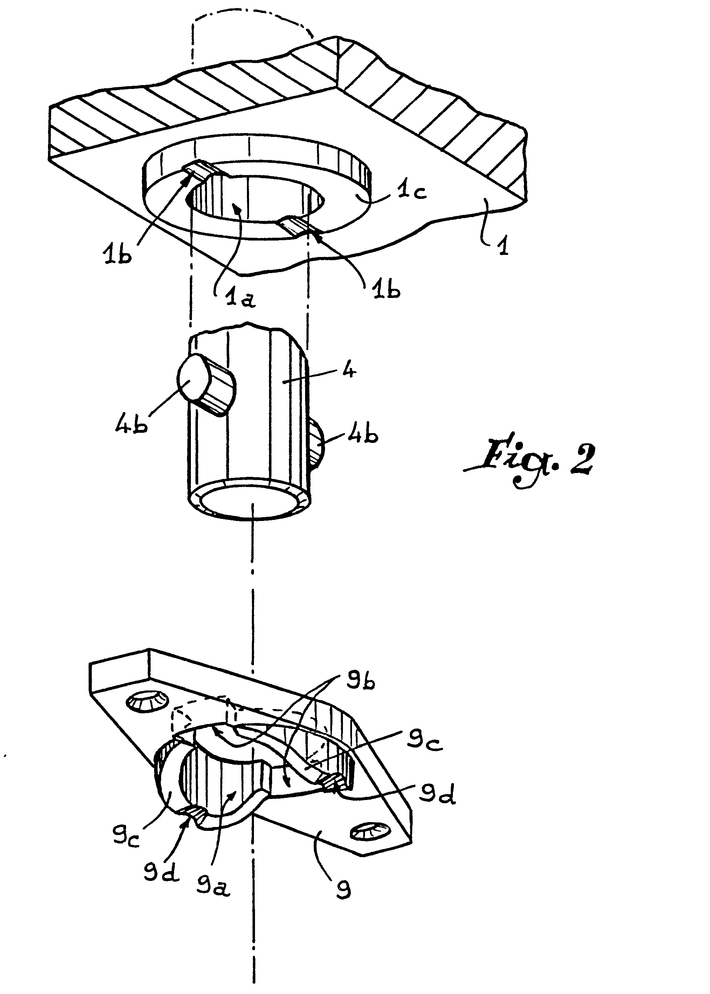

La partie centrale de la pièce 1 est creusée d'un alésage la à trois diamètres, à l'intérieur duquel est engagé un verrou cylindrique 4 pourvu d'une tête débordante de manoeuvre 4a et, à l'opposé, de deux goujons latéraux 4b, diamétralement opposés l'un à l'autre. Un ressort 5, interposé entre l'un des épaulements de l'alésage la et la tête 4a du verrou 4, repousse élastiquement ce dernier vers le haut, en tendant ainsi à maintenir les goujons 4b de celui-ci à l'intérieur d'empreintes 1b (fig. 2) ménagées dans la face d'extrémité d'un bossage 1c, lequel fait saillie sur la pièce 1 autour du débouché de l'alésage la.

Le dispositif comprend une seconde pièce principale, constituée par une barre rectangulaire 6 (fig. 1) destinée à être rapportée contre l'une des parois 7 de la machine alimentée à l'aide du dispositif envisagé. La fixation de la pièce 6 a été supposée assurée à l'aide de vis 8 qui traversent des trous 6a de ladite pièce pour se visser dans des taraudages 7a de la paroi 7. Cette pièce 6 porte en principe les éléments femelles aptes à coopérer avec les éléments mâles 2 de la pièce 1, ces éléments femelles étant formés en l'occurence par de simples alésages 6b en nombre et en disposition identiques à celui et à celle desdits éléments mâles 2 ; en coïncidence avec chaque alésage 6b, la paroi 7 est creusée d'un canal 7b relié au circuit correspondant à alimenter.

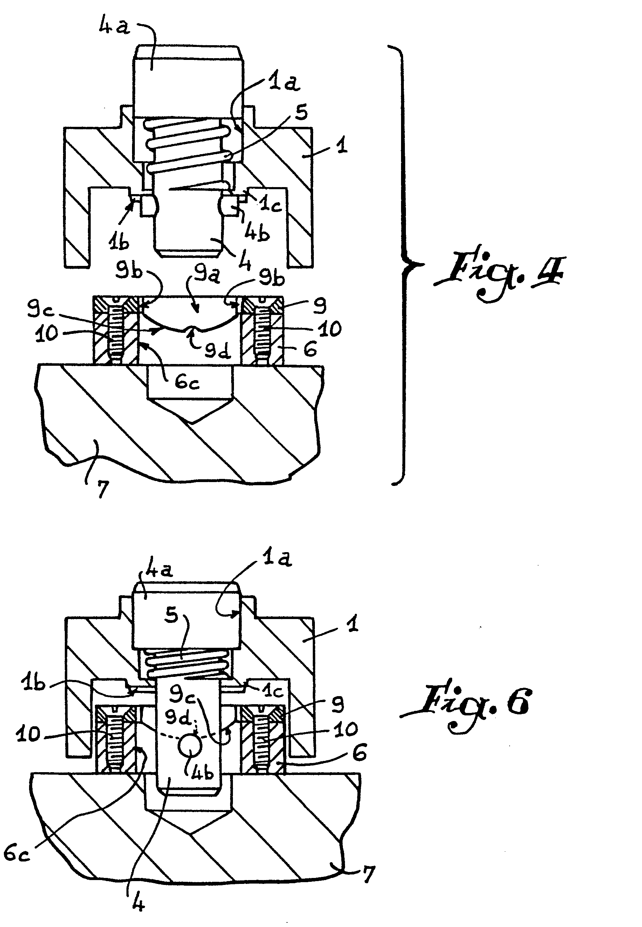

La pièce 6 est creusée en son centre d'une ouverture 6c dans le débouché supérieur de laquelle est montée une douille 9 (fig. 1 à 3), fixée en place de toute manière appropriée, par exemple à l'aide de deux vis 10 (fig. 4). Comme plus particulièrement visible en fig. 2, l'ouverture 9a de cette douille comporte deux entailles latérales 9b diamétralement opposées l'une à l'autre, la profondeur de ces entailles étant très légèrement supérieure à la longueur des goujons 4b du verrou 4 ; par ailleurs, la partie de cette douille 9 qui est engagée à l'intérieur de l'ouverture 6c est profilée pour présenter deux rampes 9c disposées de part et d'autre des entailles 9b, le point culminant de chaque rampe 9c se trouvant à mi-distance entre les entailles précitées et étant creusé d'une dépression ou empreinte 9d. On observera que les entailles 9b définissent un axe transversal orienté parallèlement à celui défini par les deux empreintes 1b du bossage 1c.

Le fonctionnement et le mode d'utilisation du dispositif ci-dessus décrit ressortent des explications qui précèdent et se comprennent aisément.

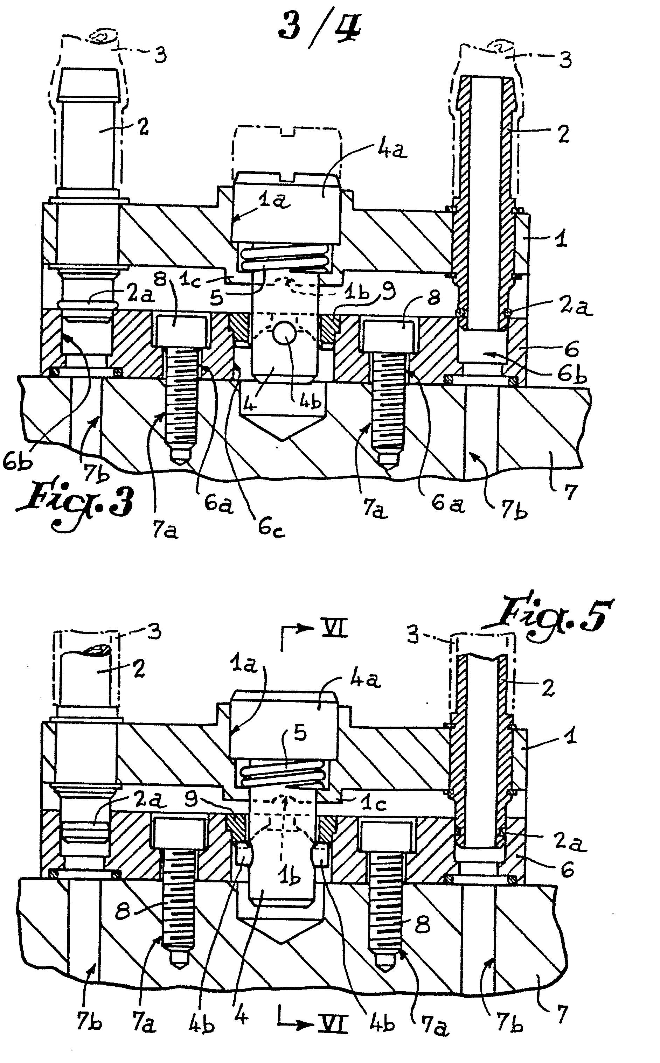

La pièce 1 avec ses éléments mâles 2 fixés aux canalisations flexibles 3 est présentée par l'opérateur par rapport à la pièce 6 fixée sur la paroi 7, à la manière représentée en fig. 3, c'est-à-dire avec la partie inférieure dépassante desdits éléments 2 orientés suivant l'axe des alésages ou éléments femelles 6b. Fig. 4 fait ressortir que cette présentation est facilitée par le profil en U de la partie inférieure de la pièce 1, profil qui guide l'opérateur et évite tout tâtonnement.

Il suffit à l'opérateur de manoeuvrer le verrou 4 en agissant sur la tête 4a de celui-ci, en le repoussant axialement en direction de la pièce 6 à l'encontre du ressort 5, puis en le faisant tourner d'un quart de tour. Comme montré en fig. 5 et 6, les goujons 4b pénètrent dans les entailles 9b, puis glissent le long des rampes 9c jusqu'à s'immobiliser dans les dépressions 9d à la fin du déplacement angulaire du verrou. Bien entendu, la poussée axiale appliquée au verrou 4 a eu pour effet de rapprocher à force les deux pièces 1 et 6 et de provoquer ainsi l'emmanchement des éléments 2 dans les alésages femelles 6b.

Les deux pièces du dispositif sont alors rendues fermement solidaires l'une de l'autre, le ressort 5, en agissant sur le verrou 4, assurant la récupération automatique de toute apparition de jeu. A cette position assemblée, les éléments mâles 2 sont retenus de manière étanche à l'intérieur des alésages femelles 6b et opèrent la jonction des différents circuits.

La désolidarisation des deux pièces du dispositif s'effectue évidemment moyennant manoeuvre du verrou 4, le ressort 5 assurant le recul élastique de celui-ci au cours de la manoeuvre angulaire, en ce sens que les goujons 4b, après extraction hors des dépressions 9d, se déplacent le long des rampes 9c, traversent les entailles 9b et viennent se loger dans les empreintes 1b du bossage 1c qui les retiennent angulairement en place jusqu'au moment d'une nouvelle opération de raccordement.

La manoeuvre du verrou 4 est très simple. Dans la forme de réalisation décrite, on a supposé que la tête 4a était fendue diamétralement pour coopérer avec un tournevis, mais il va de soi qu'on peut profiler ladite tête de manière à ce qu'elle soit directement manoeuvrée à la main, sans outil.

6                                 **0168333**

Revendications

1. Dispositif de raccord pour le branchement simultané d'une série de circuits, du genre comprenant deux pièces assemblables formant supports pour les éléments mâles, respectivement femelles, des raccords élémentaires associés aux différents circuits à relier, lesquels éléments sont retenus à la position emmanchée par les moyens qui assurent l'assemblage des deux pièces, caractérisé en ce que ces moyens d'assemblage comprennent d'une part un verrou rotatif (4) pourvu de deux goujons latéraux opposés (4b) et monté sur l'une (1) des pièces de manière à pouvoir se déplacer axialement à l'encontre de moyens élastiques de rappel (5), et d'autre part une douille de blocage (9) solidaire de la seconde pièce (6) et dont l'ouverture (9a) présente deux entailles opposées (9b) pour permettre le passage des goujons (4b) du verrou (4) lorsque celui-ci est repoussé axialement dans l'ouverture précitée, laquelle douille assure la retenue de ce verrou une fois que celui-ci a été déplacé angulairement.

2. Dispositif suivant la revendication 1, caractérisé en ce que l'une des deux pièces (1, 6) présente en section un profil en forme de U propre à former guide lors de la présentation desdites pièces préalablement à leur assemblage.

3. Dispositif suivant l'une ou l'autre des revendications 1 et 2, caractérisé en ce que la face intérieure de la pièce (1) qui porte le verrou (4) est creusé d'empreintes opposées (1b) propres à recevoir les goujons (4b) dudit verrou qui est ainsi maintenu angulairement, sous l'effet de ses moyens élastiques de rappel (5), à l'orientation pour laquelle lesdits goujons sont propres à traverser les entailles (9b) de la douille (9).

4. Dispositif suivant l'une quelconque des revendications 1 à 3, caractérisé en ce que la douille (9) présente, entre les entailles (9b), des rampes (9c) dont le sommet est creusé d'une dépression (9d) propre à recevoir les goujons (4b) du verrou (4) à la fin du déplacement angulaire de celui-ci.

Fig.1

Fig. 2

Fig.3

Fig.5

0168333

4/4

Fig. 4

Fig. 6

Office européen
des brevets

**0168333**
Numero de la demande

**RAPPORT DE RECHERCHE EUROPEENNE**

EP  85 42 0109

## DOCUMENTS CONSIDERES COMME PERTINENTS

| Catégorie | Citation du document avec indication. en cas de besoin. des parties pertinentes | Revendication concernee | CLASSEMENT DE LA DEMANDE (Int Cl 4) |
|---|---|---|---|
| A | GB-A- 772 158 (GASKELL & CHAMBERS LTD.) * Figures 1-10 * | 1 | F 16 L 37/00 |
| A | DE-A-2 061 821 (FRISK) * Figures 1-4 * | 1 | |
| A | FR-A-1 515 030 (P. DURAND) * Figures 1-5 * | 1 | |
| A | FR-A-2 473 656 (DE CHANTELOUP) * Figure 7 * | 1 | |

--- 

DOMAINES TECHNIQUES RECHERCHES (Int. Cl.4)

F 16 L

Le présent rapport de recherche a été établi pour toutes les revendications

| Lieu de la recherche | Date d'achèvement de la recherche | Examinateur |
|---|---|---|
| LA HAYE | 09-09-1985 | ANGIUS P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82